# EUROPÄISCHE PATENTSCHRIFT

(11) **EP 1 787 743 B1**
(45) Veröffentlichungstag und Bekanntmachung des Hinweises auf die Patenterteilung: **23.07.2008**
(21) Anmeldenummer: 06124130.3
(22) Anmeldetag: 15.11.2006
(51) Int. Cl.: B23B 5/16, B26D 3/16

(54) **Schälwerkzeug für Schläuche und Verfahren zum Schälen von armierten Schläuchen**
Stripping tool for hoses and method of stripping reinforced hoses
Outil de dénuder pour tuyaux et procédé pour dénuder la couche de revêtement des tuyaux renforcés

(30) Priorität: 18.11.2005 DE 102005055114
(43) Veröffentlichungstag der Anmeldung: 23.05.2007
(73) Patentinhaber: Dipl.-Ing. H. Schulz HDS Hydraulik GmbH & Co. KG, 51647 Gummersbach (DE)
(72) Erfinder: Siemens, Kornelius, 51647, Gummersbach (DE)
(74) Vertreter: Patentanwälte Dr. Solf & Zapf

(56) Entgegenhaltungen:
- DE-A1- 10 233 862
- GB-A- 783 705
- US-A- 2 348 186
- US-A- 2 641 944
- US-A- 3 335 526
- US-A- 3 354 762
- US-A- 3 759 121

## Beschreibung

Die vorliegende Erfindung betrifft ein Schälwerkzeug für Schläuche insbesondere für armierte Schläuche gemäß dem Oberbegriff des Anspruchs 1. Ein solches Schälwerkzeug ist aus der US-A-3,759,121 bekannt. Des Weiteren betrifft die Erfindung ein Verfahren zum Schälen von armierten Schläuchen gemäß dem Oberbegriff des Anspruchs 1. Ein solches Verfahren ist ebenfalls aus der US-A-3,759,121 bekannt..

Schälwerkzeuge der genannten Art dienen dazu, Schlauchenden, insbesondere die Enden von mit Drahtgeflechten armierten Hydraulikschläuchen, die vorzugsweise bis zu einem Arbeitsdruck von 230 bar einsetzbar sind, durch Abschälen im Bereich der Außenwand für die Montage einer Armatur vorzubereiten. Die Notwendigkeit eines Abschälens ergibt sich dabei daraus, dass zwischen dem Schlauch und der Armatur eine besonders feste Verbindung hergestellt werden soll, wobei zu diesem Zweck die Armatur unmittelbar mit der Armierung verbunden wird. Insbesondere wird durch das Schälen an den Enden von geschnittenem, sogenanntem Geflechtschlauchmaterial über eine definierte Länge der radial über der Armierung liegende Obergummi entfernt.

Bekannte Schälwerkzeuge der eingangs genannten Art enthalten ein oder mehrere, jeweils mit einem Schälmesser oder einer Schäleinrichtung bestückte Haltearme, welche die Decke des auf einen Aufnahmedorn aufgeschobenen Schlauchmaterials in drehender Arbeitsbewegung entfernen. Ein Haltearm ist dabei hinsichtlich seiner Längsachse, etwa achsparallel und in festem Abstand zur Achse des Aufnahmedorns angeordnet und verdrehbar, d. h. auf einer Kreisbahn relativbeweglich, gegenüber dem Aufnahmedorn gelagert. Hierbei ist es beim Schälen prinzipiell möglich, dass entweder der Haltearm bei feststehendem Aufnahmedorn bewegt wird oder der Schlauch mittels des Aufnahmedorns gedreht wird, wobei der Haltearm feststeht. Die erste Möglichkeit ist in der Praxis bevorzugt, weil längere Schläuche hinsichtlich des Drehens schwer zu handhaben sind.

Schälmesser und Schlauch werden beim Schälen in der Regel auch in axialer Richtung relativ zueinander bewegt, um eine bestimmte Schällänge auf dem jeweiligen Schlauchende zu erzielen. Dies geschieht insbesondere dadurch, dass der Schlauch beim Schälen entlang der Längsachse des Aufnahmedorns immer weiter auf den Aufnahmedorn aufgeschoben wird, wobei der Aufnahmedorn einen Schlauchanschlag für die Stirnseite des Schlauches aufweist, der diese Bewegung begrenzt.

Durch die bekannten Schälwerkzeuge wird auf Grund von nicht zu vermeidenden Toleranzen des Schlauchmaterials bei der Bearbeitung - außer der - wie erwähnt - auch als Obergummi bezeichneten Schlauchdecke - häufig entweder die oberste Drahteinlage durch die Schälmesser beschädigt oder aber nicht ausreichend gesäubert. Ferner werden fast immer an der an der Stirnseite des Schlauches liegenden Anschnittstelle, gegen die das Messer frontal, d. h. in Achsrichtung des Aufnahmedornes, fährt, eine Vielzahl von Drahtenden der Armierung aus ihrer ursprünglichen Lage herausgerissen und stark aufgeweitet. Durch diesen Vorgang, der in Fachkreisen auch als die Bildung einer "Blume" bezeichnet wird, kommt es zu einer Beeinträchtigung der Festigkeit des Schlauchmaterials, wodurch die Montage von Armaturen erschwert wird oder sogar gänzlich verhindert ist.

Der vorliegenden Erfindung liegt die Aufgabe zu Grunde, ein Schälwerkzeug der eingangs beschriebenen Art derart zu verbessern, dass unabhängig von vorhandenen Schlauchtoleranzen eine Beschädigung des zu schälenden Schlauches, insbesondere eines in der Schlauchwand eingebetteten Geflechts eines armierten Schlauches, vermieden werden kann. Die Aufgabe, die der vorliegenden Erfindung zu Grunde liegt, umfasst dabei auch die Bereitstellung eines entsprechenden Verfahrens der eingangs genannten Art.

Diese Aufgabe wird mit einem Schälwerkzeug mit den Merkmalen des unabhängigen Anspruchs 1 gelöst. Das erfindungsgemäße Schälwerkzeug gestattet dabei die Realisierung des Verfahrens des unabhängigen Anspruchs 16.

Die Erfindung gewährleistet - vorteilhafterweise auch bei Schläuchen mit geringfügig schwankendem Außendurchmesser und/oder variierender Tiefe einer in die Schlauchwandung eingebetteten Armierung - eine saubere und wiederholgenaue Entfernung des Schlauchobergummis.

In bevorzugter Ausführung der Erfindung kann dabei vorgesehen sein, dass - um zu erreichen, dass das Schälmesser beim Schälen, insbesondere von einer Außenmantelfläche des Schlauches her, in radialer Richtung schräg zur Achse des Aufnahmedorns in den Schlauch eindringt - der Haltearm in einem Basisteil schwenkbar, vorzugsweise mit einem freien, insbesondere das Schälmesser tragenden, Ende auf die Achse des Aufnahmedorns hin verschwenkbar, gelagert ist. Durch die entsprechende Schwenkbewegung ist es dabei möglich, die Höhe einer vom Schlauchmantel abzutragenden Außenschicht zu Beginn des Schälens in einfacher Weise einzustellen und während des Schälens bedarfsweise und/oder in vorherbestimmter Weise zu verändern.

Weitere vorteilhafte Ausführungen der Erfindung sind in den Unteransprüchen und der nachfolgenden speziellen Beschreibung enthalten.

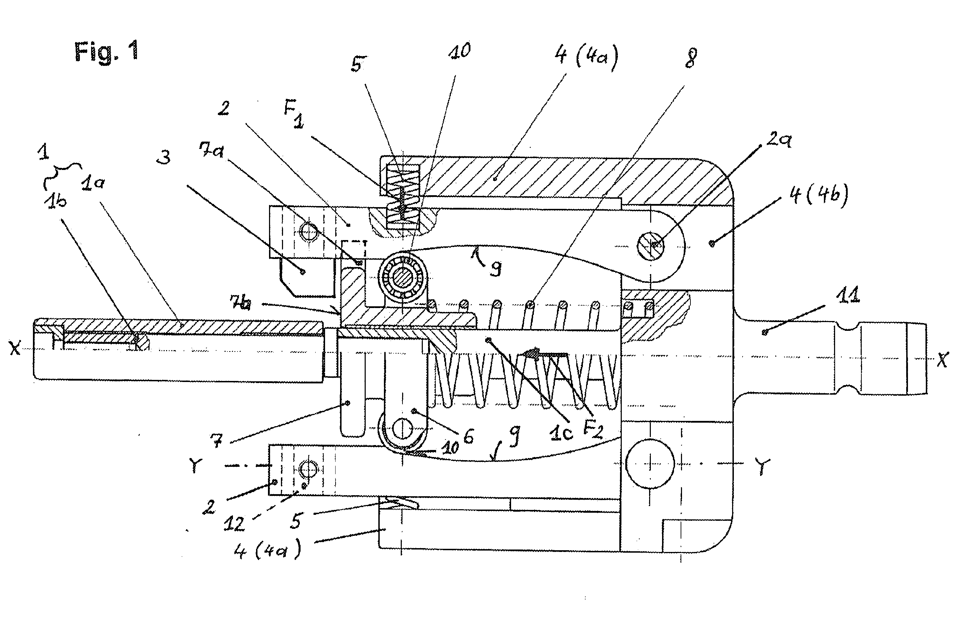

Anhand eines in der Zeichnung dargestellten Ausführungsbeispiels wird die Erfindung näher erläutert. Es zeigt dabei die einzige
Fig. 1 einen axialen Halbschnitt durch ein erfindungsgemäßes Schälwerkzeug.

Wie aus Fig. 1 hervorgeht, weist ein erfindungsgemäßes Schälwerkzeug für Schläuche, insbesondere für armierte Schläuche, einen koaxial in einen Schlauch einsteckbaren Aufnahmedorn 1 und mindestens einen Haltearm 2 für ein Schälmesser 3 auf. Im dargestellten, bevorzugten Fall sind es drei, insbesondere drei gleichartig ausgebildete, jeweils um 120° gegeneinander versetzte Haltearme 2. Jeder Haltearm 2 ist hinsichtlich seiner Längsachse Y-Y beabstandet zur Längsachse X-X des Aufnahmedorns 1 angeordnet, die die Mittenachse des gesamten erfindungsgemäßen Schälwerkzeugs bildet. Die Haltearme 2 sind jeweils auf einer Kreisbahn relativbeweglich gegenüber dem Aufnahmedorn 1 gelagert.

Erfindungsgemäß ist der Haltearm 2 jeweils derart ausgeführt und/oder gelagert, dass das Schälmesser 3 beim Schälen eine radial gerichtete Zustellbewegung auf den zu schälenden Schlauch hin ausführen kann. Bevorzugt ist dabei, dass der Haltearm 2 derart ausgeführt und/oder gelagert ist, dass das Schälmesser 3 beim Schälen, insbesondere von einer Außenmantelfläche des Schlauches her, in radialer Richtung schräg zur Achse X-X des Aufnahmedorns in den Schlauch eindringt.

Hierzu ist in der dargestellten Ausführung der Erfindung insbesondere vorgesehen, dass der Haltearm 2 in einem Basisteil 4 schwenkbar, vorzugsweise mit einem freien, insbesondere das Schälmesser 3 tragenden, Ende auf die Achse des Aufnahmedorns X-X hin verschwenkbar, gelagert ist. Das entsprechende Gelenk ist in der Zeichnung mit dem Bezugszeichen 2a bezeichnet. Bezüglich des Haltearms 2 ist Fig. des Weiteren zu entnehmen, dass der Haltearm 2 unter einer radial nach innen gerichteten Druckbelastung F₁ gelagert ist. Zur Druckbelastung F₁ des Haltearms 2 ist dabei eine Druckfeder 5 vorgesehen, die zwischen dem Haltearm 2 und dem den Haltearm 2, insbesondere mit einem Mantelarm 4a, außenseitig umgreifenden Basisteil 4 angeordnet ist. Die Druckfeder 5 kann - wie dargestellt - insbesondere eine Schraubenfeder sein, die mit ihren Enden jeweils in nicht näher bezeichnete Aufnahmebohrungen des Haltearms 2 und des Mantelarms 4a eingesteckt ist.

Durch einen, nachstehend hinsichtlich Aufbau und Funktion noch näher beschriebenen Abstandhalter 6 wird der radial nach innen gerichteten Belastung der Druckfeder 5 auf den Haltearm 2 entgegenwirkt.

Der Aufnahmedorn 1 des erfindungsgemäßen Schälwerkzeugs weist dabei einen Außendorn 1 a und einen Innendorn 1 b auf, wobei der Außendorn 1 a den Innendorn hülsenförmig umgreift und der Außendorn 1a und der Innendorn 1b gegeneinander verdrehbar sind.

Der Innendorn 1 b ist drehfest mit dem Basisteil 4, insbesondere mit einem Kopf 4b des Basisteils 4, in dem auch die Haltearme 2 angelenkt sind, verbunden. Die Verbindung erfolgt dabei über einen aus dem Außendorn 1a herausgeführten Abschnitt 1 c des Innendorns 1 b.

Dem Aufnahmedorn 1 ist ein axialbeweglicher Axialanschlag 7 für den Schlauch zugeordnet. Dieser Axialanschlag 7 sitzt - wie Fig. 1 zeigt - auf dem aus dem Außendorn 1a herausragenden Abschnitt 1c des Innendorns 1b hülsenartig bzw. nach der Art eines Ringflanschbauteils auf. Der Axialanschlag 7 steht unter einer axialen, einem auf den Aufnahmedorn aufgesteckten Ende des zu schälenden Schlauches entgegen gerichteten Druckbelastung F₂. Um diese Druckbelastung F₂ zu erzeugen, ist eine Druckfeder 8 vorgesehen, die zwischen dem Axialanschlag 7 und dem vom Axialanschlag 7 axial beabstandeten Basisteil 4, insbesondere zwischen dem Axialanschlag 7 und dem Kopf 4b des Basisteils 4 konzentrisch um den aus dem Außendorn 1a herausgeführten Abschnitt 1 c des Innendorns 1 b bzw. die Längsachse X-X des erfindungsgemäßen Schälwerkzeugs, angeordnet ist.

Der vorstehend bereits erwähnte Abstandhalter 6 ist mit dem Abstandhalter 7 für den Schlauch verbunden und bildet bevorzugt eine axial bewegliche Baueinheit mit dem Axialanschlag 7.

Die Haltearme 2 weisen dabei jeweils radial innenseitig eine Führungsspur 9 für die zugeordneten Abstandhalter 6 und die Abstandhalter 6 radial außenseitig jeweils eine komplementäre Führungskontur 10 für die zugeordneten Haltearme 2 auf. Die Führungskontur 10 des Abstandhalters 6 ist in der dargestellten Ausführung durch ein Wälzlager gebildet. Die Führungsspur 9 des Haltearms 2 und die Führungskontur 10 des Abstandhalters 6 können bevorzugt zumindest bereichsweise formschlüssig ineinander greifen, um eine drehfeste Verbindung miteinander auszubilden. Die Führungsspur 9 des Haltearms 2 weist eine radial nach außen gewölbte Kurvenform auf.

Zum Einspannen in ein Futter eines nicht dargestellten Antriebsgerätes weist das erfindungsgemäße Schälwerkzeug einen koaxial mit der Längsachse X-X des Aufnahmedorns 1 ausgerichteten, insbesondere an den Kopf 4b des Basisteils 4 auf der dem Aufnahmedorn 1 gegenüber liegenden Seite angeformten, Werkzeughalter 11 auf.

Die Arbeitsweise eines erfindungsgemäßen Schälwerkzeugs ist folgende:

Zum Abschälen eines Schlauches, insbesondere eines armierten Schlauches, der ein in seiner Wandung umfangsgemäß eingebettetes Drahtgeflecht aufweist, wird der Schlauch mit seinem freien Ende - manuell oder mit Hilfe geeigneter Vorrichtungen - koaxial auf den Aufnahmedorn 1 aufgesteckt und drehfest gehalten.

Die Haltearme 2 mit den Schälmessern 3 werden auf ihrer Kreisbahn um den Aufnahmedorn 1 in Bewegung gesetzt, wozu das erfindungsgemäße Schälwerkzeug bevorzugt über den Werkzeughalter 11 in ein Antriebsgerät eingespannt sein kann.

Der Schlauch wird dann zur Realisierung des Schälvorganges immer weiter auf den Aufnahmedorn 1 aufgeschoben, wobei der Innendorn 1b rotiert, aber der den Innendorn 1 b hülsenförmig umgreifende Außendorn 1a zusammen mit dem Schlauch drehfest bleibt. Dadurch wird vorteilhafterweise während des Bearbeitungsvorgangs eine mechanische Beschädigung des Schlauchinnengummis zuverlässig vermieden.

Ein erfindungsgemäßes Schälwerkzeug einer Baugröße ist durch die mit Vorteil auswechselbar gestalteten Schälmesser 3 und gegebenenfalls eine in radialer Richtung in geringem Umfang variable Positionierbarkeit in Messeraufnahmen 12 der Haltearme 2 für jeweils mehrere, insbesondere drei, jeweils durch den Nenndurchmesser festgelegte Schlauch-Grundabmessungen einsetzbar. Toleranzen der Schläuche beeinträchtigen dabei die Bearbeitungsqualität nicht.

Zu Beginn werden die Schälmesser 3 bevorzugt so in die Haltearme 2 eingesetzt, dass der die Tiefe der Materialabtragung definierende Messerklingenwirkungskreis in einem Bereich liegt, der sich zwischen dem anfänglichen Außendurchmesser des Schlauches und dem Außendurchmesser, der durch die in der Schlauchwand vorhandene Armierung festgelegt ist, befindet.

Infolge des Vorschubs des Schlauches in axialer Richtung auf den Aufnahmedorn 1 kommen die Schälmesser 3 mit der Schlauchdecke in Berührung und das Schälen beginnt. Entsprechend der vorgenannten Einstellung des Wirkungskreises der Schälmesser 3 ergibt sich dabei, dass an der Schlauchanschnittstelle ein geringer Rest des Obergummis verbleibt. Dies hat keine negativen Auswirkungen auf die Funktionssicherheit von später aufgepressten Anschlussarmaturen, verhindert jedoch vorteilhafterweise ein Ausfransen der Drahtenden der Armierung.

Der eingestellte Wirkungskreis der Schälmesser 3 bleibt dabei wegen des Vorhandenseins der Abstandhalter 6 - trotz der verschwenkbaren Lagerung des Haltearms 2 im Basisteil und der radial nach innen gerichteten Druckbelastung F₁ auf die Haltearme 2 - zunächst konstant.

Bei weiterem Vorschub des Schlauches auf den Aufnahmedorn 1 stößt der Schlauch stirnseitig gegen den axial auf dem aus dem Außendorn 1a herausragenden Abschnitt 1 c des Innendorns 1 b beweglich geführten Axialanschlag 7.

Der Schlauch kann damit nur noch mit dem Axialanschlag 7 zusammen gegen die Kraft der Feder 8 weiterbewegt werden.

Die hülsenartige Ausführung des Axialanschlages 7 bewirkt dabei, dass der Axialanschlag 7 gegenüber dem Dornabschnitt 1c sowohl axial beweglich, als auch drehbar ist. Eine Relativverdrehung des Axialanschlages 7 gegenüber dem Dornabschnitt 1c - insbesondere ein Stillstehen des Axialanschlages 7, während sich der Dornabschnitt 1c dreht - wird jedoch durch eine - wie dargestellt - an einem Haltearm 2 zur Anlage kommende, tangential wirkenden Anschlagnase 7a verhindert.

Durch die axiale Bewegung des Axialanschlages 7 wird auch der Abstandhalter 6 mitgenommen. Dabei wird die Führungskontur 10 des Abstandhalters 6 in der komplementären Führungsspur 9 des Haltearms 2 verschoben und bewegt sich infolge der radial nach außen gewölbten Kurvenform der Führungsspur 9 radial nach außen. Dies führt dazu, dass jeweils der Haltearm 2 unter der Wirkung der auf ihn wirkenden Druckfeder 5 radial nach innen verschwenkt wird und sich somit der Durchmesser des Wirkungskreises der Schälmesser 3 verkleinert. Das bedeutet, dass die Schälmesser 3 eine radial gerichtete Zustellbewegung auf den Schlauch hin ausführen. Insbesondere kommt es bei der Überlagerung mit der Vorschubbewegung des Schlauches dazu, dass jeweils die Schälmesser 3 in radialer Richtung schräg zur Achse des Aufnahmedorns X-X in den Schlauch eindringen. Die Schälmesser 3 tauchen so federnd bis auf die Drahtoberfläche der Armierung ein, wobei unabhängig von vorhandenen Schlauchtoleranzen eine saubere und wiederholgenaue Entfernung des Schlauchobergummis erzielt werden kann. Der Schlauchobergummi kann abgetragen werden, ohne dass die Klinge der Schälmesser 3 jedoch das obere Drahtgeflecht berührt oder gar beschädigt.

Sobald eine vorgesehene Schällänge auf dem Schlauchende erreicht ist, was beispielsweise dadurch angezeigt werden kann, dass die zunächst nur tangential wirkende Anschlagnase 7a an einem nicht dargestellten Längenbegrenzungsanschlag des Basisteils 4 axial zur Anlage kommt, ist der Schälvorgang abgeschlossen.

Die Erfindung beschränkt sich nicht auf das beschriebene Ausführungsbeispiel, sondern umfaßt auch durch die Ansprüche umfassten Ausführungen. So kann, wie bereits erwähnt, die Zahl der Haltearme 2 und Schälmesser 3 oder deren Form variieren, ohne dass der Rahmen der Erfindung, verlassen wird.

Ferner kann der Fachmann die Erfindung in geeigneter Weise ergänzen. So hat das oben beschriebene Mitrotieren des Axialanschlages 7 mit dem Dornabschnitt 1c zur Folge, dass der Axialanschlag 7 sich gegenüber dem feststehenden, an ihm anliegenden Schlauchende unter Reibung verdreht, was zu unerwünschten Verschleißerscheinungen führen kann. Dem kann jedoch dadurch entgegengewirkt werden, dass die entsprechende Anlagefläche 7b des Axialanschlages 7 für den Schlauch aus einem sehr reibungsarmen Material, wie PTFE, gefertigt wird oder dass ein nicht mit dem Axialanschlag 7 mitrotierendes, gleitend oder rollend am Axialanschlag 7 befestigtes, zusätzliches Anlageteil für das Schlauchende vorgesehen wird.

Was das vorstehend beschriebene Verfahren betrifft, so wird diesem - wie bereits erwähnt - ebenfalls eine erfinderische Bedeutung beigemessen. Neben der anfänglichen Messerpositionierung werden dabei insbesondere die folgenden Merkmale als besonders relevant angesehen:
- das Schälmesser 3 führt beim Schälen eine radial gerichtete Zustellbewegung auf den Schlauch hin aus;
- das Schälmesser 3 dringt beim Schälen in radialer Richtung schräg zur Achse X-X des Aufnahmedorns 1 für den Schlauch in den Schlauch ein;
- das Schälmesser 3 steht beim Schälen unter auf den Schlauch hin wirkender federnder Druckbelastung F₁;
- das Schälmesser 3 wird beim Schälen über die vorgesehene Schällänge des Schlauches hinweg auf einer fest vorgegebenen, insbesondere durch den Verlauf der Führungskontur 9 des Haltearms 2 definierten, Bahn geführt.

Bezugszeichen
- 1: Aufnahmedorn
- 1 a: Außendorn von 1
- 1b: Innendorn von 1
- 1c: Dornabschnitt von 1 b auβerhalb von 1a
- 2: Haltearm
- 2a: Gelenk von 2
- 3: Schälmesser
- 4: Basisteil
- 4a: Mantelarm von 4
- 4b: Kopf von 4
- 5: Druckfeder für 2
- 6: Abstandhalter für 2
- 7: Axialanschlag
- 7a: Anschlagnase von 7
- 7b: Schlauchanlagefläche von 7
- 8: Druckfeder für 7
- 9: Führungsspur von 2 für 10
- 10: Führungskontur von 6 für 9
- 11: Werkzeughalter
- 12: Messeraufnahme für 3

- F₁: Druckbelastung auf 2 durch 5
- F₂: Druckbelastung auf 7 durch 8
- X-X: Längsachse von 1
- Y-Y: Längsachse von 2

## Patentansprüche

1. Schälwerkzeug für Schläuche, insbesondere für armierte Schläuche, mit einem koaxial in einen Schlauch einsteckbaren Aufnahmedorn (1) und mit mindestens einem hinsichtlich seiner Längsachse (Y-Y) beabstandet zur Längsachse (X-X) des Aufnahmedorns (1) angeordneten, auf einer Kreisbahn relativbeweglich gegenüber dem Aufnahmedorn (1) unter einer radial nach innen gerichteten Druckbelastung (F₁) gelagerten Haltearm (2) für ein Schälmesser (3), wobei der Haltearm (2) derart ausgeführt und/oder gelagert ist, dass das Schälmesser (3) beim Schälen eine radial gerichtete Zustellbewegung auf den Schlauch hin ausführt,
**dadurch gekennzeichnet, dass** dem Aufnahmedorn (1) ein axialbeweglicher Axialanschlag (7) für den Schlauch zugeordnet ist, der unter einer axialen, einem zu schälenden Ende des Schlauches entgegen gerichteten Druckbelastung (F₂) gelagert und mit einem Abstandhalter (6) verbunden ist, welcher der radial nach innen gerichteten Druckbelastung (F₁) auf den Haltearm (2) entgegenwirkt, wobei jeweils der Haltearm (2) radial innenseitig eine Führungsspur (9) für den Abstandhalter (6) und der Abstandhalter (6) radial außenseitig eine komplementäre Führungskontur (10) für den Haltearm (2) aufweist.

2. Schälwerkzeug nach Anspruch 1,
**dadurch gekennzeichnet, dass** der Haltearm (2) derart ausgeführt und/oder gelagert ist, dass das Schälmesser (3) beim Schälen, insbesondere von einer Außenmantelfläche des Schlauches her, in radialer Richtung schräg zur Achse (X-X) des Aufnahmedorns (1) in den Schlauch eindringt.

3. Schälwerkzeug nach Anspruch 1 oder 2,
**dadurch gekennzeichnet, dass**derHaltearm(2)ineinem Basisteil (4) schwenkbar, vorzugsweise mit einem freien, insbesondere das Schälmesser tragenden, Ende auf die Achse (X-X) des Aufnahmedorns (1) hin verschwenkbar, gelagert ist (Gelenk 2a).

4. Schälwerkzeug nach Anspruch 3,
**dadurch gekennzeichnet, dass** zur Druckbelastung (F₁) des Haltearms eine Druckfeder (5) vorgesehen ist, die zwischen dem Haltearm (2) und dem den Haltearm (2), insbesondere mit einem Mantelarm (4a), außenseitig umgreifenden Basisteil (4) angeordnet ist.

5. Schälwerkzeug nach einem der Ansprüche 1 bis 4,
**dadurch gekennzeichnet, dass** der Aufnahmedorn (1) einen Innendorn (1b) und einen den Innendorn (1b) hülsenförmig umgreifenden Außendorn (1a) aufweist, wobei der Innendorn (1 b) und der Außendorn (1 a) gegeneinander verdrehbar sind.

6. Schälwerkzeug nach Anspruch 3 und 5,
**dadurch gekennzeichnet, dass** der Innendorn (1b) drehfest mit dem Basisteil (4) verbunden ist.

7. Schälwerkzeug nach Anspruch 5 oder 6,
**dadurch gekennzeichnet, dass** der Axialanschlag (7) für den Schlauch auf einem aus dem Außendorn (1a) herausragenden Dornabschnitt (1 c) des Innendorns (1 b) hülsenartig aufsitzt.

8. Schälwerkzeug nach Anspruch 3,
**dadurch gekennzeichnet, dass** zur Druckbelastung (F₂) des Axialanschlages (7) eine Druckfeder (8) vorgesehen ist, die zwischen dem Axialanschlag (7) und dem vom Axialanschlag (7) axial be abstandeten Basisteil (4), insbesondere zwischen dem Axialanschlag (7) und einem Kopf (4b) des Basisteils (4), angeordnet ist.

9. Schälwerkzeug nach Anspruch 1,
**dadurch gekennzeichnet, dass** die Führungskontur (10) des Abstandhalters (6) für den Haltearm (2) durch ein Wälzlager gebildet ist.

10. Schälwerkzeug nach Anspruch 1 oder 9,
**dadurch gekennzeichnet, dass** die Führungsspur (9) des Haltearms (2) für den Abstandhalter (2) eine radial nach außen gewölbte Kurvenform aufweist.

11. Schälwerkzeug nach einem der Ansprüche 1, 9 oder 10,
**dadurch gekennzeichnet, dass** die Führungsspur (9) des Haltearms (2) und die Führungskontur (10) des Abstandhalters (6) zumindest bereichsweise formschlüssig ineinander greifen.

12. Schälwerkzeug nach einem der Ansprüche 1 bis 11,
**gekennzeichnet durch** zwei oder mehr, insbesondere drei jeweils um 120° gegeneinander versetzte, Haltearme (2) für Schälmesser (3).

13. Schälwerkzeug nach einem der Ansprüche 1 bis 12,
**gekennzeichnet durch** einen koaxial mit der Längsachse (X-X) des Aufnahmedorns (1) ausgerichteten, insbesondere an den Kopf (4b) des Basisteils (4) auf der dem Aufnahmedorn (1) gegenüber liegenden Seite angeformten, Werkzeughalter (11) zum Einspannen in ein Futter eines Antriebsgerätes.

14. Schälwerkzeug nach einem der Ansprüche 1 bis 13,
**dadurch gekennzeichnet, dass** eine Anlagefläche (7b) des Axialanschlages (7) für den Schlauch aus einem besonders reibungsarmen Material, wie PTFE, besteht.

15. Schälwerkzeug nach einem der Ansprüche 1 bis 13,
**dadurch gekennzeichnet, dass** am Axialanschlag (7) ein gleitend oder rollend befestigtes Anlageteil zur stirnseitigen Anlage des Schlauches vorgesehen ist.

16. Verfahren zum Schälen von armierten Schläuchen, insbesondere unter Einsatz eines Schälwerkzeugs nach einem der Ansprüche 1 bis 15, wobei zu Beginn des Schälens mindestens ein Schälmesser (3) derart positioniert wird, dass eine, durch einen Messerklingenwirkungskreis des Schälmessers (3) definierte Tiefe einer Materialabtragung im Bereich zwischen einem anfänglichen Außendurchmesser eines zu schälenden Schlauches und einem Außendurchmesser, der durch die in der Schlauchwand befindliche Armierung festgelegt ist, liegt, und wobei das Schälmesser (3) beim Schälen eine radial gerichtete Zustellbewegung auf den Schlauch hin ausführt,
**dadurch gekennzeichnet, dass** das Schälmesser (3) beim Schälen über eine Schällänge des Schlauches hinweg auf einer fest vorgegebenen durch den Verlauf einer Führungskontur (9) definierten Bahn geführt wird.

17. Verfahren nach Anspruch 16,
**dadurch gekennzeichnet, dass** das Schälmesser (3) beim Schälen in radialer Richtung schräg zu einer Achse (X-X) eines Aufnahmedorns (1) für den Schlauch in den Schlauch eindringt.

18. Verfahren nach Anspruch 16 oder 17,
**dadurch gekennzeichnet, dass** das Schälmesser (3) beim Schälen im Wesentlichen auf einer Kreisbahn relativ zum zu schälenden Schlauch bewegt wird.

19. Verfahren nach einem der Ansprüche 16 bis 18,
**dadurch gekennzeichnet, dass** das Schälmesser (3) beim Schälen unter auf den Schlauch hin wirkender federnder Druckbelastung (F₁) steht.

## Claims

1. A stripping tool for hoses, in particular for reinforced hoses, with a receiving mandrel (1) capable of being inserted coaxially in a hose and with at least one holding arm (2) - arranged with respect to its longitudinal axis (**Y-Y**) at a distance from the longitudinal axis (**X-X**) of the receiving mandrel (1) and mounted so as to be movable on a circular path relative to the receiving mandrel (1) under a pressure stressing (**F₁**) directed radially inwards - for a stripping knife (3), wherein the holding arm (2) is constructed and/or mounted in such a way that during the stripping the stripping knife (3) performs a radially directed delivery movement onto the hose, **characterized in that** the receiving mandrel (1) has associated with it an axially movable axial stop (7) for the hose which is mounted under an axial pressure stressing (**F₂**) directed opposite to the end of the hose to be stripped and is connected to a spacer holder (6) which counteracts the pressure stressing (**F**₁) directed radially inwards onto the holding arm (2), wherein the holding arm (2) has in each case a guide track (9) radially on the inside for the spacer holder (6) and the spacer holder (6) has a complementary guide contour (10) radially on the outside for the holding arm (2).

2. A stripping tool according to Claim 1, **characterized in that** the holding arm (2) is constructed and/or mounted in such a way that during the stripping the stripping knife (3) penetrates into the hose in a radial direction obliquely to the axis (**X-X**) of the receiving mandrel (1), in particular from an external face of the hose.

3. A stripping tool according to Claim 1 or 2, **characterized in that** the holding arm (2) is mounted (joint 2a) in a base part (4) so as to be pivotable, and preferably pivotable with a free end, in particular carrying the stripping knife, towards the axis (**X-X**) of the receiving mandrel (1).

4. A stripping tool according to Claim 3, **characterized in that** a compression spring (5), which is arranged between the holding arm (2) and the base part (4) engaging around the holding arm (2) on the outside, in particular with a jacket arm (4a), is provided for the pressure stressing (**F₁**) of the holding arm.

5. A stripping tool according to any one of Claims 1 to 4, **characterized in that** the receiving mandrel (1) has an inner mandrel (1b) and an outer mandrel (1a) engaging around the inner mandrel (1b) in the manner of a sleeve, wherein the inner mandrel (1b) and the outer mandrel (1a) are rotatable in opposite directions towards each other.

6. A stripping tool according to Claims 3 and 5, **characterized in that** the inner mandrel (1b) is connected to the base part (4) in a rotationally fixed manner.

7. A stripping tool according to Claim 5 or 6, **characterized in that** the axial stop (7) for the hose is mounted in the manner of a sleeve on a mandrel portion (1c) of the inner mandrel (1b) projecting out of the outer mandrel (1a).

8. A stripping tool according to Claim 3, **characterized in that** a compression spring (8), which is arranged between the axial stop (7) and the base part (4) at an axial distance from the axial stop (7), in particular between the axial stop (7) and a head (4b) of the base part (4), is provided for the pressure stressing **(F₂)** of the axial stop (7).

9. A stripping tool according to Claim 1, **characterized in that** the guiding contour (10) of the spacer holder (6) for the holding arm (2) is formed by a roller bearing.

10. A stripping tool according to Claim 1 or 9, **characterized in that** the guide track (9) of the holding arm (2) for the spacer holder (6) has a curved shape bulging radially towards the outside.

11. A stripping tool according to any one of Claims 1, 9 or 10, **characterized in that** the guide track (9) of the holding arm (2) and the guiding contour (10) of the spacer holder (6) engage one in the other in a positively locking manner at least locally.

12. A stripping tool according to any one of Claims 1 to 11, **characterized by** two or more holding arms (2), and in particular three holding arms (2) offset by 120° with respect to one another in each case, for stripping knifes (3).

13. A stripping tool according to any one of Claims 1 to 12, **characterized by** a tool holder (11), orientated coaxially with the longitudinal axis (X-X) of the receiving mandrel (1) and in particular formed integrally on the head (4b) of the base part (4) on the side situated opposite the receiving mandrel (1), for clamping in a chuck of a driving appliance.

14. A stripping tool according to any one of Claims 1 to 13, **characterized in that** an abutment face (7b) of the axial stop (7) for the hose consists of a material with particularly low friction, such as PTFE.

15. A stripping tool according to any one of Claims 1 to 13, **characterized in that** an abutment part fastened in a sliding or a rolling manner is provided on the axial stop (7) for the abutment of the hose on the end face.

16. A method of stripping reinforced hoses, in particular using a stripping tool according to any one of Claims 1 to 15, wherein at the beginning of the stripping at least one stripping knife (3) is positioned in such a way that a depth - defined by an effective reach of the blade of the stripping knife (3) - of a removal of material is in the region between an initial external diameter of a hose to be stripped and an external diameter which is set in the reinforcement present in the wall of the hose, and wherein during the stripping the stripping knife (3) performs a radially directed delivery movement towards the hose, **characterized in that** during the stripping the stripping knife (3) is guided over a stripping length of the hose on a path pre-set in a fixed manner and defined by the course of a guide contour (9).

17. A method according to Claim 16, **characterized in that** during the stripping the stripping knife (3) penetrates into the hose in a radial direction obliquely to an axis (**X-X**) of a receiving mandrel (1) for the hose.

18. A method according to Claim 16 or 17, **characterized in that** during the stripping the stripping knife (3) is moved substantially on a circular path relative to the hose to be stripped.

19. A method according to any one of Claims 16 to 18, **characterized in that** during the stripping the stripping knife (3) is under springing pressure stressing (F₁) acting upon the hose.

## Revendications

1. Outil de décorticage pour tuyaux, notamment pour tuyaux armés, comportant un mandrin récepteur (1) pouvant être inséré de manière coaxiale dans un tuyau et au moins un bras de retenue (2) disposé au niveau de son axe longitudinal (Y-Y) à distance de l'axe longitudinal (X-X) du mandrin récepteur (1), logé sur une voie circulaire avec une mobilité relative par rapport au mandrin récepteur (1) sous une charge de pression (F₁) dirigée de manière radiale vers l'intérieur pour un couteau de décorticage (3), le bras de retenue (2) étant réalisé et/ou logé de telle manière que le couteau de décorticage (3) exécute lors du décorticage, un mouvement d'avance dirigé de manière radiale en direction du tuyau,
**caractérisé en ce qu'**une butée axiale mobile axialement (7) pour le tuyau est associée au mandrin récepteur (1), laquelle butée est logée sous une charge de pression axiale (F₂) dirigée en sens inverse par rapport à une extrémité à décortiquer du tuyau et est raccordée à une entretoise (6), qui contrecarre la charge de pression (F₁) dirigée de manière radiale vers l'intérieur sur le bras de retenue (2), le bras de retenue (2) présentant respectivement radialement du côté intérieur une piste de guidage (9) pour l'entretoise (6) et l'entretoise (6) présentant radialement du côté extérieur un contour de guidage complémentaire (10) pour le bras de retenue (2).

2. Outil de décorticage selon la revendication 1,
**caractérisé en ce que** le bras de retenue (2) est réalisé et/ou logé de telle manière que le couteau de décorticage (3) pénètre dans le tuyau, lors du décorticage, notamment depuis une surface d'enveloppe extérieure du tuyau dans le sens radial de manière oblique par rapport à l'axe (X-X) du mandrin récepteur (1).

3. Outil de décorticage selon la revendication 1 ou 2,
**caractérisé en ce que** le bras de retenue (2) est logé de manière à pouvoir pivoter dans une pièce de base (4), de préférence par une extrémité libre supportant notamment le couteau de décorticage, sur l'axe (X-X) du mandrin récepteur (1) (articulation 2a).

4. Outil de décorticage selon la revendication 3,
**caractérisé en ce que**, pour exercer la charge de pression (F₁) sur le bras de retenue (2), il est prévu un ressort de pression (5) qui est disposé entre le bras de retenue (2) et la pièce de base (4) entourant du côté extérieur le bras de retenue (2) notamment avec un bras d'enveloppe (4a).

5. Outil de décorticage selon l'une quelconque des revendications 1 à 4,
**caractérisé en ce que** le mandrin récepteur (1) présente un mandrin interne (1b) et un mandrin externe (1a) entourant en forme de manchon le mandrin interne (1b), le mandrin interne (1) et le mandrin externe (1a) pouvant tourner l'un par rapport à l'autre.

6. Outil de décorticage selon les revendications 3 et 5,
**caractérisé en ce que** le mandrin interne (1b) est raccordé de manière rigide en torsion à la pièce de base (4).

7. Outil de décorticage selon la revendication 5 ou 6,
**caractérisé en ce que** la butée axiale (7) pour le tuyau est assise à la manière d'un manchon sur une section de mandrin (1c) du mandrin interne (1b) dépassant du mandrin externe (1a).

8. Outil de décorticage selon la revendication 3,
**caractérisé en ce que**, pour exercer la charge de pression (F₂) sur la butée axiale (7), il est prévu un ressort de pression (5), qui est disposé entre la butée axiale (7) et la pièce de base (4) espacée de manière axiale de la butée axiale (7), notamment entre la butée axiale (7) et une tête (4b) de la pièce de base (4).

9. Outil de décorticage selon la revendication 1,
**caractérisé en ce que** le contour de guidage (9) de l'entretoise (6) pour le bras de retenue (2) est formé par un palier à roulement.

10. Outil de décorticage selon la revendication 1 ou 9,
**caractérisé en ce que** la piste de guidage (10) du bras de retenue (2) pour l'entretoise (6) présente une forme de courbe bombée radialement vers l'extérieur.

11. Outil de décorticage selon l'une quelconque des revendications 1, 9 ou 10,
**caractérisé en ce que** la piste de guidage (9) du bras de retenue (2) et le contour de guidage (10) de l'entretoise (6) viennent en prise l'un dans l'autre par correspondance de forme au moins par endroits.

12. Outil de décorticage selon l'une quelconque des revendications 1 à 11,
**caractérisé par** deux bras de retenue (2) ou davantage, notamment trois bras de retenue pour des couteaux de décorticage (3), décalés respectivement de 120° les uns par rapport aux autres.

13. Outil de décorticage selon l'une quelconque des revendications 1 à 12,
**caractérisé par** un porte-outil (11) aligné de manière coaxiale avec l'axe longitudinal (X-X) du mandrin récepteur (1), formé notamment au niveau de la tête (4b) de la pièce de base (4) sur le côté opposé au mandrin récepteur (1) et destiné à être monté dans un fourreau d'un appareil d'entraînement.

14. Outil de décorticage selon l'une quelconque des revendications 1 à 13,
**caractérisé en ce qu'**une surface d'appui (7b) de la butée axiale (7) pour le tuyau se compose d'un matériau à friction particulièrement faible, tel que du PTFE.

15. Outil de décorticage selon l'une quelconque des revendications 1 à 13,
**caractérisé en ce qu'**il est prévu au niveau de la butée axiale (7) une pièce d'appui fixée de manière à pouvoir coulisser ou à pouvoir rouler et destinée à l'appui côté frontal du tuyau.

16. Procédé de décorticage de tuyaux armés, notamment en utilisant un outil de décorticage selon l'une quelconque des revendications 1 à 15, au moins un couteau de décorticage (3) étant positionné au début du décorticage de telle manière qu'une profondeur définie par un champ d'action de lame de couteau du couteau de décorticage (3) se situe dans une zone se trouvant entre un diamètre extérieur initial d'un tuyau à décortiquer et un diamètre extérieur qui est défini par l'armature se trouvant dans la paroi du tuyau, le couteau de décorticage (3) exécutant, lors du décorticage, un mouvement d'avance dirigé de manière radiale en direction du tuyau,
**caractérisé en ce que** le couteau de décorticage (3) est guidé, lors du décorticage, sur une longueur de décorticage du tuyau sur une voie prédéfinie fixement par l'extension d'un contour de guidage (9).

17. Procédé selon la revendication 16,
**caractérisé en ce que** le couteau de décorticage (3), lors du décorticage, pénètre dans le tuyau dans le sens radial de manière oblique par rapport à un axe (X-X) d'un mandrin récepteur (1) pour le tuyau.

18. Procédé selon la revendication 16 ou 17,
**caractérisé en ce que** le couteau de décorticage (3), lors du décorticage, est déplacé essentiellement sur une voie circulaire par rapport au tuyau à décortiquer.

19. Procédé selon l'une quelconque des revendications 16 à 18,
**caractérisé en ce que** le couteau de décorticage (3), lors du décorticage, se trouve sous une charge de pression (F₁) agissant sur le tuyau.
